# EUROPÄISCHE PATENTANMELDUNG

(11) **EP 3 978 170 A1**
(43) Veröffentlichungstag der Anmeldung: **06.04.2022**
(21) Anmeldenummer: 20199891.1
(22) Anmeldetag: 02.10.2020
(51) Int. Cl.: B23B 51/00, B28D 1/14

(54) **WERKZEUG FÜR EINE MOBILE WERKZEUGMASCHINE**

(71) Anmelder: Hilti Aktiengesellschaft, 9494 Schaan (LI)
(72) Erfinder: Glaser, Arno, 9494 Schaan (LI); Foser, Roland, 9491 Ruggell (LI); Kleine, Werner, 28832 Achim (DE)
(74) Vertreter: Hilti Aktiengesellschaft Corporate Intellectual Property

(57) **Zusammenfassung**

Die Erfindung betrifft ein besonders kostengünstig herstellbares und verwendbares Werkzeug (10) für eine mobile Werkzeugmaschine, beispielsweise eine Handwerkzeugmaschine, zur Bearbeitung von Gestein oder mineralischen Materialien, umfassend einen Schaft (12) und einen Werkzeugkopf (14), wobei zumindest entlang eines Teils des Schafts (12) ein Absaugkanal (16) zum Transport von Gesteinsmehl ausgebildet ist. Das Werkzeug (10) ist dadurch gekennzeichnet, dass der Werkzeugkopf (14) und ein zumindest entlang eines Teils des Schafts (12) längsseitig angeordnetes Kanalelement (18) des Werkzeugs (10) lösbar mit dem Schaft (12) koppelbar und / oder gekoppelt sind.

## Beschreibung

Die Erfindung geht aus von einem Werkzeug für eine mobile Werkzeugmaschine, insbesondere eine Handwerkzeugmaschine, zur Bearbeitung von Gestein oder mineralischen Materialien, umfassend einen Schaft und einen Werkzeugkopf, wobei zumindest entlang eines Teils des Schafts ein Absaugkanal zum Transport von Gesteinsmehl ausgebildet ist.

Derartige Werkzeuge erlauben es, bei der Bearbeitung des Gesteins oder der mineralischen Materialien entstehendes Gesteinsmehl unmittelbar aus einem Bearbeitungsbereich des Werkzeugkopfes zu entfernen. Ein derartiges Werkzeug wird daher beispielsweise in Situationen eingesetzt, in denen besonders hohe Anforderungen an die Sauberkeit einer den Bearbeitungsbereich angrenzenden Umgebung gestellt werden.

Die Ausbildung der Absaugkanäle gattungsgemäßer Werkzeuge ist jedoch bislang mit einem erheblichen Kostenaufwand verbunden, beispielsweise, wenn der Absaugkanal als Längsbohrung im Schaft ausgebildet wird. Über die Lebensdauer des Werkzeugs hinweg ist somit bislang mit verhältnismäßig hohen Nutzungskosten zu kalkulieren.

Aufgabe der vorliegenden Erfindung ist es daher, ein gattungsgemäßes Werkzeug anzubieten, das eine besonders wirtschaftliche Nutzung ermöglicht.

Gelöst wird die Aufgabe durch ein Werkzeug für eine mobile Werkzeugmaschine, insbesondere eine Handwerkzeugmaschine, zur Bearbeitung von Gestein oder mineralischen Materialien, umfassend einen Schaft und einen Werkzeugkopf, wobei zumindest entlang eines Teils des Schafts ein Absaugkanal zum Transport von Gesteinsmehl ausgebildet ist, wobei der Werkzeugkopf und ein zumindest entlang eines Teils des Schafts längsseitig angeordnetes Kanalelement des Werkzeugs lösbar mit dem Schaft koppelbar und / oder gekoppelt sind.

Der Erfindung liegt dabei der Gedanke zugrunde, ein gattungsgemäßes Werkzeug modular auszubilden. Insbesondere kann der Absaugkanal durch das Kanalelement und den Schaft zusammen ausgebildet und / oder ausbildbar sein. Es ist somit nicht notwendig, beispielsweise den Schaft in seiner Länge nach - und damit in einer besonders kostenaufwändigen Weise - zu durchbohren. Das Kanalelement kann auf den Schaft aufschiebbar und / oder aufgeschoben sein. Der Werkzeugkopf kann mit dem Schaft koppelbar und / oder gekoppelt sein. Somit ergibt sich zudem eine sehr einfache, schnelle und kostengünstige Montage des gesamten Werkzeugs.

Das erfindungsgemäße Werkzeug zeichnet sich auch durch eine besonders flexible Verwendbarkeit aus. So kann je nach Bedarf der Werkzeugkopf ausgetauscht werden. Auch lassen sich abgenutzte Werkzeugköpfe problemlos ersetzen. Es ist somit nicht mehr notwendig, das gesamte Werkzeug zu entsorgen und ein Werkzeug komplett neu zu beschaffen. Zusätzlich lässt sich durch das erfindungsgemäße Werkzeug die Gesamtlebensdauer verlängern, sodass sich auch dadurch Kosten weiter senken lassen.

Das erfindungsgemäße Werkzeug kann, insbesondere durch Austausch des Werkzeugkopfes und / oder durch Austausch des Schafts und / oder des Kanalelements, schnell und kostengünstig auf unterschiedliche Größen und / oder Längen anpassbar sein. Mit einem Schaft kann dank verschiedener Werkzeugköpfe unterschiedlichen Durchmessers ein großer Arbeitsbereich abgedeckt werden. Auch lassen sich in besonderem Maß die Investitionskosten gegenüber bekannten Werkzeugen mindern.

Das Werkzeug kann ein Bohrwerkzeug, beispielsweise ein Hammerbohrwerkzeug, ein Meißelwerkzeug oder dergleichen sein. Allgemein kann das Werkzeug besonders bevorzugt zur Verwendung mit einer Bohrmaschine, einem Bohrhammer, einer Meißelmaschine oder dergleichen eingerichtet sein. Denkbar ist auch, insbesondere durch Auswechseln des Werkzeugkopfes, je nach Anwendungsfall das Werkzeug sowohl als Bohrwerkzeug als auch als Meißelwerkzeug einzusetzen. Es kann ferner zur Bearbeitung von natürlichen oder künstlichen Gesteinen, beispielsweise zementhaltigen Gesteinen, eingerichtet sein. Das Werkzeug sowie die mobile Werkzeugmaschine, mit der das Werkzeug verwendet werden soll, können besonders bevorzugt zur Verwendung im Baubereich, beispielsweise im Hochbau und / oder im Tiefbau, eingerichtet sein. Das Werkzeug, insbesondere der Werkzeugkopf, kann dazu beispielsweise einen Durchmesser von höchstens 50 mm, bevorzugt von höchstens 40 mm, aufweisen. Das Werkzeug kann eine Gesamtlänge von weniger als 2 m, insbesondere von weniger als 1 m, aufweisen. Die mobile Werkzeugmaschine kann tragbar sein, insbesondere kann sie ein Gewicht von weniger als 25 kg aufweisen.

Die mobile Werkzeugmaschine kann eine Handwerkzeugmaschine sein oder umfassen. Sie kann auch ein Bauroboter, insbesondere eingerichtet für Arbeiten im Hoch- und / oder Tiefbau, sein oder einen solchen umfassen.

Unter "koppelbar" und / oder "gekoppelt" kann auch eine Koppelart bzw. Kopplung verstanden werden, die ein Element an einem anderen Element in wenigstens eine Richtung festlegt. Insbesondere kann das Kanalelement am Schaft derart lösbar gekoppelt und / oder koppelbar sein, dass es zwar nicht radial vom Schaft entfernbar ist, jedoch beispielsweise entlang einer Längsrichtung des Schafts verschieblich anordenbar und / oder angeordnet ist. Dazu kann das Kanalelement auf den Schaft aufschiebbar und / oder aufgeschoben sein. Der Schaft kann eine zylindrische oder zumindest eine im Wesentlichen zylindrische Form aufweisen.

Bei einer besonders bevorzugten Ausgestaltung der Erfindung weist der Werkzeugkopf einen Einlasskanal auf. Der Einlasskanal kann eine Werkzeugspitze, also beispielsweise ein mit wenigstens einer Schneide besetztes Ende des Werkzeugkopfes, mit dem Absaugkanal verbinden. Somit kann an der Werkzeugspitze erzeugtes Gesteinsmehl durch den und / oder entlang dem Werkzeugkopf bis zum Absaugkanal geleitet werden. Der Einlasskanal kann innerhalb des Werkzeugkopfes und / oder an wenigstens einer Außenseite des Werkzeugkopfes ausgebildet sein. Insbesondere kann der Einlasskanal als Einlassnut ausgebildet sein oder zumindest eine Einlassnut umfassen.

Das Werkzeug, insbesondere der Werkzeugkopf, kann aus einem Hartmetall ausgebildet sein oder zumindest ein Hartmetall aufweisen. Dazu kann der Werkzeugkopf beispielsweise Wolframcarbid aufweisen. Das Werkzeug, insbesondere der Werkzeugkopf, kann auch eine Legierung aufweisen. Das Werkzeug, insbesondere der Werkzeugkopf, kann auch Diamant aufweisen.

Zwischen dem Kanalelement und dem Werkzeugkopf kann ein Seitenkanal ausgebildet sein. Der Seitenkanal kann ringförmig oder zumindest im Wesentlichen ringförmig sein. Ein solcher Seitenkanal kann es ermöglichen, dass Gesteinsmehl um den Werkzeugkopf herum absaugbar und in den Absaugkanal leitbar ist.

Denkbar ist auch, dass das Werkzeug einen Absaugtrichter aufweist, der eingerichtet ist, aus der Richtung des Werkzeugkopfes anströmendes Gesteinsmehl in den Absaugkanal zu leiten. Der Absaugtrichter kann als separates Element ausgebildet sein. Alternativ kann der Absaugtrichter auch einen Teil des Kanalelements bilden. Dazu kann der Absaugtrichter einstückig am Kanalelement ausgebildet sein.

Der Absaugtrichter kann bei Werkzeugen mit großem Durchmesser, beispielsweise mit einem verhältnismäßig großen Durchmesser des Werkzeugkopfes, besonders vorteilhaft eingesetzt werden.

Um ein Verstopfen des Absaugkanals zu vermeiden, kann sich die Querschnittsfläche des Absaugkanals im Bereich des Schafts, insbesondere in einem Endbereich des Schafts, in einer vom Werkzeugkopf wegweisenden Richtung vergrößern.

Das Kanalelement kann einfach am Schaft montierbar sein, wenn es mehrteilig und / oder aufklappbar, insbesondere längsseitig aufklappbar, ausgebildet ist. Dazu kann das Kanalelement wenigstens zwei Halbschalen aufweisen.

Das Kanalelement kann drehbar am Schaft anordenbar und / oder angeordnet, insbesondere gelagert, sein. Alternativ ist denkbar, das Kanalelement relativ zum Schaft zumindest gegen eine Relativdrehung zu sichern oder das Kanalelement am Schaft vollständig zu fixieren.

Ist das Kanalelement als den Schaft umschließendes Hülsenelement ausgebildet, kann sich der Absaugkanal umfangsseitig zumindest im Wesentlichen über den gesamten Schaft hinweg erstrecken. Der Absaugkanal kann insbesondere ringförmig oder zumindest im Wesentlichen ringförmig, insbesondere den Umfang des Schafts umfassend, ausgebildet sein.

Alternativ oder ergänzend ist auch denkbar, dass das Kanalelement als den Schaft zumindest bereichsweise überdeckendes Deckelement ausgebildet ist. In diesem Fall ist es bevorzugt, wenn das Werkzeug mehrere Kanalelemente aufweist. Die mehreren Kanalelemente können gleichmäßig über den Umfang des Schafts hinweg verteilt anordenbar und / oder angeordnet sein. Wenigstens eines der Kanalelemente kann aus einem Kunststoff ausgebildet sein.

Das Kanalelement kann aus einem elastischen Material ausgebildet oder ein solches Material aufweisen. Das Kanalelement kann dazu ein Elastomer sein oder ein solches aufweisen. Es kann auch aus einem Kunststoff, aus einem Gummi und / oder aus einem metallhaltigen Material, beispielsweise Stahl, ausgebildet sein oder zumindest einen solchen beziehungsweise ein solches aufweisen. Hierdurch kann der mit dem Kanalelement ausgebildete Absaugkanal besonders einfach reinigbar sein, insbesondere im Falle von Kunststoff oder Gummi.

Das Kanalelement und / oder der Schaft können wenigstens ein Befestigungsmittel aufweisen, um das Kanalelement am Schaft zu befestigen.

Der Schaft kann wenigstens eine Absaugnut aufweisen, durch die ein Teil des Absaugkanals ausgebildet und / oder ausbildbar ist. Dies ist insbesondere günstig, wenn das Kanalelement als Deckelement ausgebildet ist. Dann können der Schaft und das als Deckelement ausgebildete Kanalelement den Absaugkanal ausbilden. Die Absaugnut und / oder das Kanalelement können dazu mit einem Schwalbenschwanzprofil ausgestattet sein. Durch das Schwalbenschwanzprofil kann das Kanalelement lösbar mit dem Schaft koppelbar und / oder gekoppelt sein.

Um auch unter Belastung des Werkzeugs zu gewährleisten, dass der Absaugkanal seine Querschnittsfläche zumindest weitgehend beibehält, kann das Werkzeug wenigstens einen Abstandshalter zur Aufrechterhaltung eines Absaugraums zwischen dem Schaft und dem Kanalelement aufweisen. Der Abstandshalter kann beispielsweise an einer Innenseite des Kanalelements ausgebildet sein. Denkbar ist auch, dass der Abstandshalter am Schaft ausgebildet ist. Bevorzugt kann er aus einem abriebfesten Material ausgebildet sein und / oder eine, insbesondere abriebfeste, Beschichtung aufweisen. Der Abstandshalter kann noppenförmig ausgebildet sein. Alternativ oder ergänzend kann er auch kugel- oder rollenförmig sein und / oder eine Teilkugel, eine Vollkugel und / oder eine Rolle aufweisen. Vorzugsweise können mehrere, insbesondere mindestens drei Abstandshalter, vorgesehen sein. Die mehreren Abstandshalter können gleichmäßig über den Umfang des Schafts hinweg verteilt angeordnet sein.

Bei einer Klasse von Ausführungsformen der Erfindung ist der Werkzeugkopf mittels eines Keils, mittels wenigstens einer Keilfläche und / oder mittels eines Gewindes lösbar mit dem Schaft gekoppelt und / oder koppelbar. Im Falle eines Gewindes kann dessen Drehrichtung derart gewählt sein, dass sich das Gewinde bei einer üblichen Benutzung des Werkzeugs, insbesondere bei Bohrwerkzeugen, selbsttätig festzieht.

Alternativ oder ergänzend, insbesondere zur Sicherung seiner lösbaren Kopplung, kann der Werkzeugkopf mittels eines Kopplungsstifts am Schaft lösbar gekoppelt und / oder koppelbar sein. Dazu kann das Werkzeug, insbesondere der Schaft, eine, vorzugsweise komplementär zum Kopplungsstift ausgebildete, Stiftaufnahme aufweisen. Wenigstens eine Toleranz des Kopplungsstifts und / oder der Stiftaufnahme kann so gewählt sein, dass der Werkzeugkopf unter Belastung spielfrei oder zumindest im Wesentlichen spielfrei am Schaft anliegt.

Denkbar ist auch, dass das Werkzeug einen Absaugadapter aufweist und / oder dass das Werkzeug mit einem Absaugadapter verbindbar ist. Der Absaugadapter kann eingerichtet sein, den Absaugkanal mit einem, beispielsweise separaten, Absauggerät, das einen geeigneten Unterdruck erzeugt, zu koppeln. Auch der Absaugadapter kann lösbar koppelbar am Werkzeug angeordnet und / oder anordenbar sein.

Die Modularität des erfindungsgemäßen Werkzeugs lässt sich zudem weiter steigern, wenn ein an einem dem Werkzeugkopf gegenüberliegenden Ende des Schafts angeordnetes Einsteckende lösbar mit dem Schaft gekoppelt und / oder koppelbar ist. Dann lässt sich auf besonders einfache Weise das Werkzeug an unterschiedliche Normen von Einsteckenden anpassen. Dies kann eine Verwendung des Werkzeugs mit unterschiedlichen mobilen Werkzeugmaschinen erleichtern. Auch hierdurch kann ein Benutzer des Werkzeugs über die Lebensdauer des Werkzeugs hinweg erhebliche Kosten einsparen.

Die Stiftaufnahme kann in den Werkzeugkopf hinein- oder durch den Werkzeugkopf hindurchreichen. Die Stiftaufnahme kann auch durch das Kanalelement hindurchreichen. In diesem Fall empfiehlt es sich, wenn das Kanalelement drehfest am Schaft angeordnet und / oder anordenbar ist. Dann kann der Kopplungsstift sowohl durch das Kanalelement und durch den Werkzeugkopf hindurch und in den Schaft hinein reichen oder entsprechend anordenbar sein.

Der Werkzeugkopf kann auf den Schaft aufsteckbar sein. Dazu kann das dem Werkzeugkopf zugewandte Ende des Schafts verjüngt ausgebildet sein. Bevorzugt kann es keilförmig oder zumindest wenigstens eine Keilfläche aufweisend ausgebildet sein.

Weitere Merkmale und Vorteile der Erfindung ergeben sich aus der nachfolgenden detaillierten Beschreibung von Ausführungsbeispielen der Erfindung, anhand der Figuren der Zeichnung, die erfindungswesentliche Einzelheiten zeigt, sowie aus den Ansprüchen. Die dort gezeigten Merkmale sind nicht notwendig maßstäblich zu verstehen und derart dargestellt, dass die erfindungsgemäßen Besonderheiten deutlich sichtbar gemacht werden können. Die verschiedenen Merkmale können je einzeln für sich oder zu mehreren in beliebigen Kombinationen bei Varianten der Erfindung verwirklicht sein.

In der schematischen Zeichnung sind Ausführungsbeispiele der Erfindung dargestellt und in der nachfolgenden Beschreibung näher erläutert.

### Es zeigen:

- Fig. 1: eine perspektivische Darstellung eines Werkzeugs mit einem Absaugadapter;
- Fig. 2: eine Längsschnittansicht eines Ausschnitts eines weiteren Werkzeugs;
- Fig. 3 bis 5: Längsschnittansichten von Ausschnitten von Werkzeugen mit Absaugtrichtern;
- Fig. 6: eine Längsschnittansicht eines Ausschnitts eines Werkzeugs, bei dem der Werkzeugkopf mehrere Eintrittskanäle aufweist;
- Fig. 7: eine Längsschnittansicht eines Ausschnitts eines Werkzeugs, bei dem mehrere Kanalelemente als Deckelemente ausgebildet ist und
- Fig. 8: eine Querschnittansicht des Werkzeugs gemäß Fig. 7.

In der nachfolgenden Beschreibung der Figuren werden zur Erleichterung des Verständnisses der Erfindung für gleiche oder sich funktional entsprechende Elemente jeweils die gleichen Bezugszeichen verwendet.

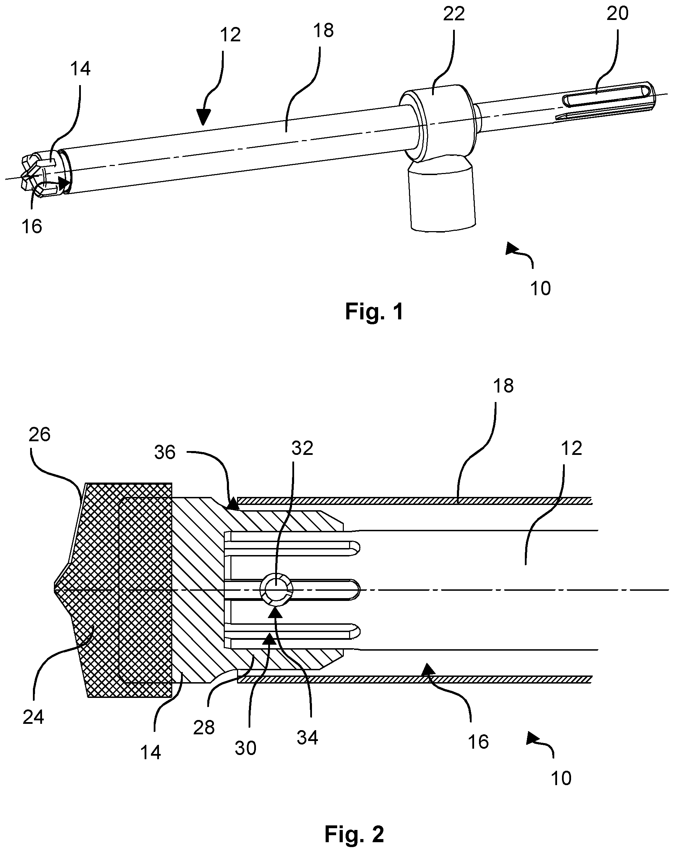

**Fig. 1** zeigt ein Werkzeug **10.** Das Werkzeug 10 ist als Gesteinsbohrer ausgebildet. Es kann mit einer mobilen Werkzeugmaschine zur Bearbeitung von Gestein oder mineralischen Materialien verwendet werden. Das Werkzeug 10 umfasst einen Schaft **12** und einen Werkzeugkopf **14.** Der Werkzeugkopf 14 ist in einer im Folgenden noch näher beschriebenen Weise mit dem Schaft 12 lösbar gekoppelt. Entlang des Schafts 12 ist ein Absaugkanal **16** zum Abtransport von Gesteinsmehl aus dem Bereich des Werkzeugkopfes 14 ausgebildet. Das Werkzeug 10 weist dazu ein Kanalelement **18** auf, das sich längsseitig entlang des Schafts 12 erstreckt. Das Kanalelement 18 umschließt den Schaft 12. Das Kanalelement 18 ist somit als Hülsenelement ausgebildet. Das Kanalelement 18 ist auf den Schaft 12 aufgeschoben und dadurch mit diesem lösbar gekoppelt.

An dem dem Werkzeugkopf 14 gegenüberliegenden Ende des Schafts 12 ist ein Einsteckende **20** am Schaft 12 ausgebildet. Das Einsteckende 20 kann beispielsweise der Norm, die üblicherweise mit "SDS-Max" bezeichnet wird, entsprechen.

Weiter ist zu erkennen, dass benachbart zum Einsteckende 20 ein Absaugadapter **22** angeordnet ist. Der Absaugadapter 22 kann mit einem Absauggerät verbunden werden. Der Absaugadapter 22 ist fluidisch mit dem Absaugkanal 16 verbunden. Der Absaugadapter 22 umschließt den Schaft 12 mitsamt dem Kanalelement 18. Der Schaft 12 ist zusammen mit dem Kanalelement 18 drehbar im Absaugadapter 22 gelagert.

Im Folgenden werden weitere Ausführungsbeispiele von Werkzeugen 10 vorgestellt. Soweit nicht anders erwähnt, können diese Werkzeuge 10 dem vorangehend beschriebenen Ausführungsbeispiel entsprechen und insbesondere auch ein oder mehrere der vorangehend beschriebenen Merkmale aufweisen. Im Folgenden werden daher vorrangig Besonderheiten der jeweiligen Ausführungsbeispiele näher erläutert.

**Fig. 2** zeigt in einer teilgeschnittenen Längsschnittansicht einen Abschnitt eines weiteren Werkzeugs 10. Sein Werkzeugkopf 14 weist eine Werkzeugspitze **24** mit mehreren Schneiden **26** auf.

An dem der Werkzeugspitze 24 gegenüberliegenden Ende des Werkzeugkopfes 14 weist dieser eine Keilverzahnung **28** auf, die mit einer komplementär ausgebildeten Keilverzahnungsaufnahme **30** des Schafts 12 zusammenwirkt, um den Werkzeugkopf 14 mit dem Schaft 12 lösbar zu koppeln. Zur weiteren Sicherung der Kopplung des Werkzeugkopfes 14 am Schaft 12 weist diese Ausführungsform des Werkzeugs 10 einen Kopplungsstift **32** auf, der in eine Stiftaufnahme **34** des Schafts 12 hineingesteckt ist. Der Kopplungsstift 32 ist hier als geschlitzter Hohlstift aus Federstahl ausgebildet. Alternativ ist jedoch auch denkbar, ihn beispielsweise als Kerbstift, als Konusstift, als Schraube oder zumindest ein Gewinde aufweisend auszubilden.

Bei diesem Werkzeug 10 ist zwischen dem Werkzeugkopf 14 und einem Kanalelement 18 ein Seitenkanal **36** ausgebildet. Der Seitenkanal 36 ist ringförmig ausgebildet. Er umschließt einen Teil des dem Werkzeugkopf 14 zugewandten Endes des Schafts 12. Der Seitenkanal 36 kann eine Breite von mindestens 2 mm, bevorzugt von mindestens 3 mm, aufweisen.

Durch den Seitenkanal 36 kann Gesteinsmehl von der Werkzeugspitze 24 mit den Schneiden 26 seitlich am Werkzeugkopf 14 vorbei gesaugt werden und in den Absaugkanal 16 gelangen.

Zu erkennen ist dabei insbesondere, dass in dem in Fig. 2 dargestellten montierten Zustand des Werkzeugs 10 die Querschnittsfläche des Seitenkanals 36 wesentlich geringer als die Querschnittsfläche des übrigen Absaugkanals 16 ist. Mit anderen Worten vergrößert sich die Querschnittsfläche des Absaugkanals 16 im Bereich des Schafts 12 ausgehend vom Seitenkanal 36 zum übrigen Absaugkanal 16 in der vom Werkzeugkopf 14 wegweisenden Richtung.

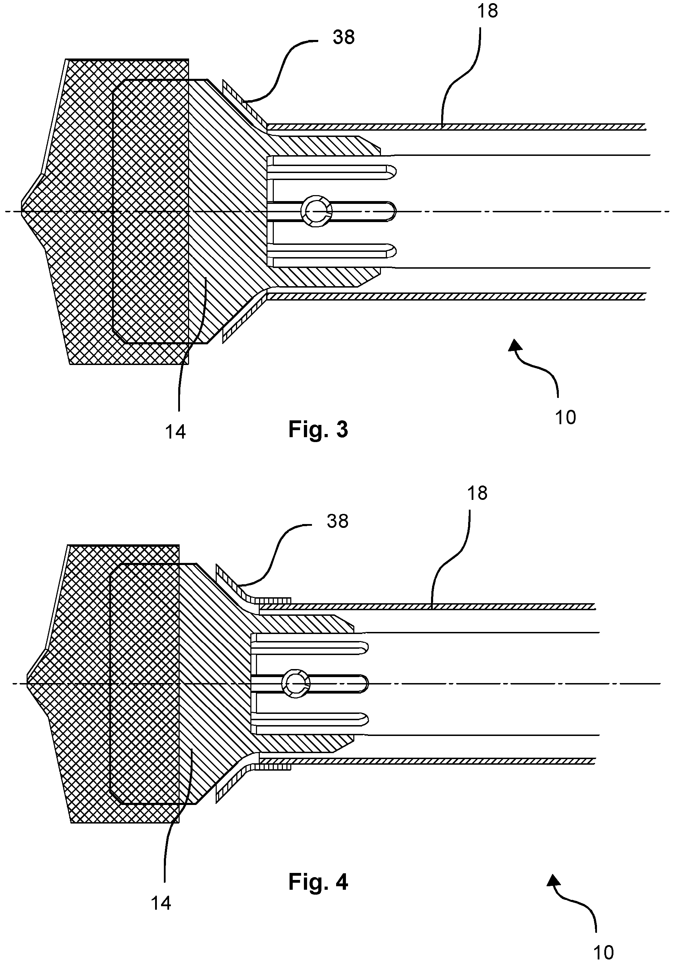

**Fig. 3** zeigt in einer weiteren teilgeschnittenen Längsschnittansicht einen Ausschnitt eines weiteren Werkzeugs 10 mit einem Absaugtrichter **38.** Bei diesem Ausführungsbeispiel ist der Absaugtrichter 38 Teil eines Kanalelements 18. Mit anderen Worten ist der Absaugtrichter 38 einstückig am Kanalelement 18 ausgebildet. Er befindet sich an dem dem Werkzeugkopf 14 zugewandten Ende des Kanalelements 18.

**Fig. 4** zeigt ein in einer teilgeschnittenen Längsschnittansicht einen Ausschnitt eines weiteren Ausführungsbeispiels eines Werkzeugs 10, das ebenfalls einen Absaugtrichter 38 aufweist. Bei diesem Ausführungsbeispiel ist jedoch der Absaugtrichter 38 als separates Element ausgebildet. Er kann auf ein Kanalelement 18 aufsteckbar und / oder aufgesteckt sein.

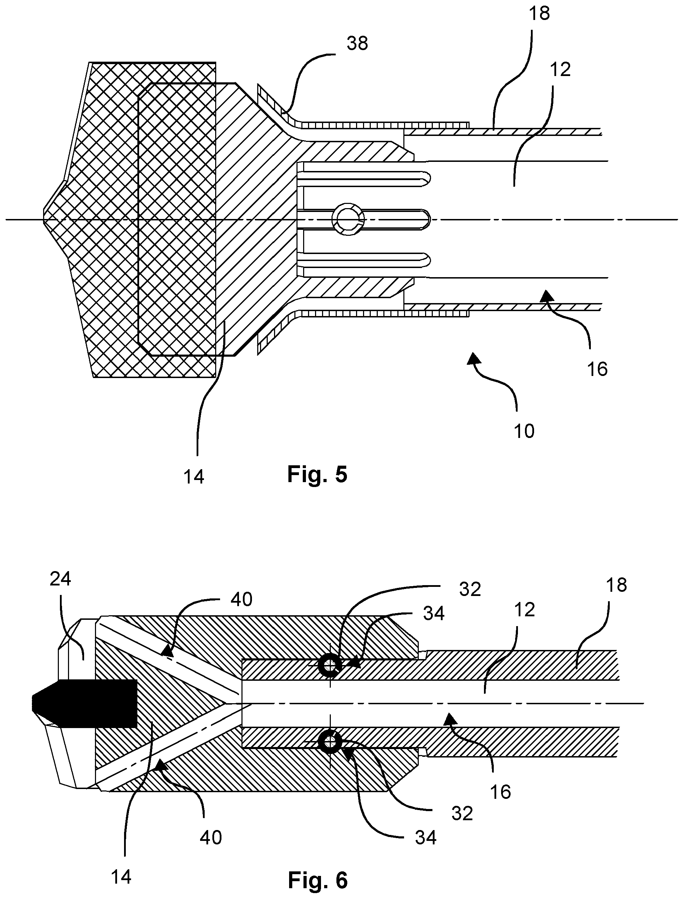

Ein weiteres Ausführungsbeispiel, bei dem ein Absaugtrichter 38 als separates Element ausgebildet ist, zeigt **Fig. 5** in einer weiteren teilgeschnittenen Längsschnittansicht eines Ausschnitts eines weiteren Werkzeugs 10.

Bei diesem Ausführungsbeispiel ist im Unterschied zum vorangehenden Ausführungsbeispiel zu erkennen, dass der Absaugtrichter 38 auch eingerichtet sein kann, ein Kanalelement 18 zumindest über einen Teil eines Werkzeugkopfes 14 hinweg in einer zu einem Schaft 12 parallelen Richtung zu verlängern. Hierdurch lässt sich die Saugwirkung eines in einem Absaugkanal 16 herrschenden Unterdrucks verbessern. Dies bietet sich beispielsweise bei verhältnismäßig großen Werkzeugköpfen 14 an.

**Fig. 6** zeigt in einer Längsschnittansicht einen weiteren Werkzeugkopf 14 in Verbindung mit einem, in Fig. 6 lediglich teilweise abgebildeten, Schaft 12.

Im Werkzeugkopf 14 sind mehrere, beispielsweise 2, 3 oder 4, Eintrittskanäle **40** ausgebildet. Denkbar ist auch, lediglich einen einzigen Eintrittskanal 40 vorzusehen. Die Eintrittskanäle 40 verlaufen durch den Werkzeugkopf 14. Sie verbinden eine Werkzeugspitze 24 des Werkzeugkopfes 14 mit einem Absaugkanal 16.

Der Absaugkanal 16 ist als zentrale Längsöffnung im Schaft 12 ausgebildet. Dazu ist der Schaft 12 aus zwei Halbschalen ausgebildet. Die beiden Halbschalen lassen sich mittels eines, in Fig. 6 aus Vereinfachungsgründen nicht dargestellten, Verbindungsmittels, beispielsweise ein Band oder eine Rastanordnung, miteinander lösbar koppeln. Somit bildet zumindest eine der beiden Halbschalen gleichzeitig ein Kanalelement 18.

Der Werkzeugkopf 14 ist mittels mehrerer Kopplungsstifte 32 in Verbindung mit komplementär am Schaft 12 ausgebildeten Stiftaufnahmen 34 mit dem Schaft 12 lösbar gekoppelt.

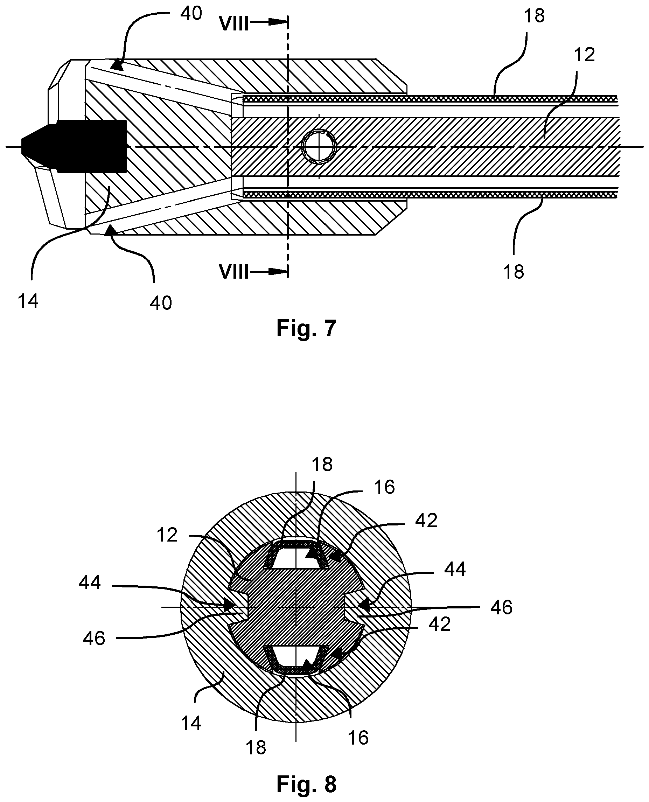

Während in den bisherigen Ausführungsbeispielen die Kanalelemente 18 als Hülsenelemente ausgebildet sind, zeigen **Fig. 7** und **Fig. 8** ein Ausführungsbeispiel, bei dem Kanalelemente 18 als Deckelemente ausgebildet sind.

Dazu zeigt Fig. 7 eine Längsschnittansicht des Ausführungsbeispiels. Fig. 8 zeigt eine Querschnittansicht entsprechend der Schnittlinie **VIII-VIII** aus Fig. 7 dieses Ausführungsbeispiels.

Zu erkennen ist wiederum ein Werkzeugkopf 14, der lösbar mit einem Schaft 12 gekoppelt ist. Der Schaft 12 weist einen zumindest im Wesentlichen kreisförmigen Querschnitt auf. Denkbar ist alternativ, dass der Schaft 12 einen, auch nicht im Wesentlichen, nichtkreisförmigen Querschnitt aufweist. Beispielsweise kann der Schaft 12 einen polygonalen Querschnitt oder einen zumindest im Wesentlichen polygonalen Querschnitt aufweisen.

Am Umfang des Schafts 12 sind zwei, entlang einer Längsachse des Schafts 12 verlaufende, Absaugkanäle 16 ausgebildet. Dazu sind in den Schaft 12 zwei Absaugnuten **42** eingearbeitet. Die Absaugnuten 42 sind, wie insbesondere anhand von Fig. 8 erkennbar, von jeweils einem Kanalelement 18 überdeckt. Mit anderen Worten sind die Kanalelemente 18 als Deckelemente ausgebildet, die eingerichtet sind, die Absaugnuten 42 zu überdecken.

Die Absaugnuten 42 sind dazu im Querschnitt komplementär zu den als Deckelement ausgebildeten Kanalelementen 18 geformt. Wie insbesondere anhand von Fig. 8 erkennbar ist, verlaufen die seitlichen Wandungen der Absaugnuten 42 einerseits und der Kanalelemente 18 andererseits schräg, insbesondere entlang nichtzentraler Sehnen. Die Absaugnuten 42 sowie die Kanalelemente 18 weisen somit, insbesondere zueinander komplementär ausgebildete, Schwalbenschwanzprofile auf, sodass die Elemente 18 und 42 nach Art von Schwalbenschwanz-Verbindungen miteinander lösbar koppelbar - und gemäß dem in Fig. 7 und Fig. 8 dargestellten Zustand - gekoppelt sind.

Die Kanalelemente 18 sind aus einem elastischen Kunststoff ausgebildet. Bei einer alternativen Ausführungsform sind sie aus einem elastischen Gummi ausgebildet.

Um den Werkzeugkopf 14 verdrehgesichert mit dem Schaft 12 koppeln zu können, sind des ferner mehrere Koppelnuten **44** am Umfang des Schafts 12 eingearbeitet, in die komplementär ausgebildete Koppelnasen **46** des Werkzeugkopfes 14 eingreifen können bzw. im Zustand gemäß Fig. 7 und Fig. 8 eingreifen.

Analog zu den vorangehend beschriebenen Ausführungsbeispielen weist der Werkzeugkopf 14 ebenfalls ein oder mehrere Einlasskanäle 40 auf. Um eine fluidische Verbindung von den Einlasskanälen 40 zu den jeweils zugeordneten Absaugkanälen 16 zu ermöglichen, verlaufen die Einlasskanäle 40 jedoch in Längsrichtung des Schafts 12 flacher, sodass sie im Bereich des Umfangs des Schafts 12 auslaufen und in die jeweiligen Absaugkanäle einmünden können.

Es versteht sich, dass die in diesen Ausführungsbeispielen dargestellten Ausführungsformen von Werkzeugköpfen 14 in beliebiger Weise, insbesondere nicht nur in den vorangehend dargestellten Paarungen, mit den vorangehend dargestellten Schäften 12, gegebenenfalls unter geeigneter Anpassung der Geometrien, kombinierbar sind. So ist beispielsweise auch eine Kombination eines Werkzeugkopfes 14 mit ein oder mehreren Einlasskanälen 40 mit einem Schaft 12 mit einem Absaugtrichter 38 denkbar.

## Patentansprüche

1. **Werkzeug** (10) für eine mobile Werkzeugmaschine, insbesondere Handwerkzeugmaschine, zur Bearbeitung von Gestein oder mineralischen Materialien, umfassend einen Schaft (12) und einen Werkzeugkopf (14), wobei zumindest entlang eines Teils des Schafts (12) ein Absaugkanal (16) zum Transport von Gesteinsmehl ausgebildet ist,
**dadurch gekennzeichnet,**
**dass** der Werkzeugkopf (14) und ein zumindest entlang eines Teils des Schafts (12) längsseitig angeordnetes Kanalelement (18) des Werkzeugs (10) lösbar mit dem Schaft (12) koppelbar und / oder gekoppelt sind.

2. Werkzeug nach dem vorhergehenden Anspruch, **dadurch gekennzeichnet, dass** der Werkzeugkopf (14) einen Einlasskanal (40) aufweist.

3. Werkzeug nach einem der vorhergehenden Ansprüche, **dadurch gekennzeichnet, dass** zwischen dem Kanalelement (18) und dem Werkzeugkopf (14) ein Seitenkanal (36) ausgebildet ist.

4. Werkzeug nach einem der vorhergehenden Ansprüche, **dadurch gekennzeichnet, dass** das Werkzeug (10) einen Absaugtrichter (38) aufweist, der eingerichtet ist, aus der Richtung des Werkzeugkopfes (14) anströmendes Gesteinsmehl in den Absaugkanal (16) zu leiten.

5. Werkzeug nach einem der vorhergehenden Ansprüche, **dadurch gekennzeichnet, dass** sich die Querschnittsfläche des Absaugkanals (16) im Bereich des Schafts (12), insbesondere in einem Endbereich des Schafts (12), in einer vom Werkzeugkopf (14) wegweisenden Richtung vergrößert.

6. Werkzeug nach einem der vorhergehenden Ansprüche, **dadurch gekennzeichnet, dass** das Kanalelement (18) mehrteilig und / oder aufklappbar, insbesondere längsseitig aufklappbar, ausgebildet ist.

7. Werkzeug nach einem der vorhergehenden Ansprüche, **dadurch gekennzeichnet, dass** das Kanalelement (18) als den Schaft (12) umschließendes Hülsenelement ausgebildet ist.

8. Werkzeug nach einem der vorhergehenden Ansprüche, **dadurch gekennzeichnet, dass** das Kanalelement (18) als den Schaft (12) lediglich bereichsweise überdeckendes Deckelement, vorzugsweise aus einem elastischen Material, einem Kunststoff und / oder einem Gummi, ausgebildet ist.

9. Werkzeug nach einem der vorhergehenden Ansprüche, **dadurch gekennzeichnet, dass** der Schaft (12) wenigstens eine Absaugnut (42) aufweist, durch die zumindest ein Teil des Absaugkanals (16) ausgebildet und / oder ausbildbar ist.

10. Werkzeug nach einem der vorhergehenden Ansprüche, **dadurch gekennzeichnet, dass** das Werkzeug wenigstens einen Abstandshalter zur Aufrechterhaltung eines Absaugraums zwischen dem Schaft (12) und dem Kanalelement (18) aufweist.

11. Werkzeug nach einem der vorhergehenden Ansprüche, **dadurch gekennzeichnet, dass** der Werkzeugkopf (14) mittels eines Keils, mittels wenigstens einer Keilfläche und / oder mittels eines Gewindes lösbar mit dem Schaft (12) gekoppelt und / oder koppelbar ist.

12. Werkzeug nach einem der vorhergehenden Ansprüche, **dadurch gekennzeichnet, dass** der Werkzeugkopf (14) mittels eines Kopplungsstifts (32) am Schaft (12) lösbar gekoppelt und / oder koppelbar ist.

13. Werkzeug nach einem der vorhergehenden Ansprüche, **dadurch gekennzeichnet, dass** das Werkzeug (10) einen Absaugadapter (22) aufweist und / oder dass das Werkzeug mit einem Absaugadapter (22) verbindbar ist.

14. Werkzeug nach einem der vorhergehenden Ansprüche, **dadurch gekennzeichnet, dass** ein an einem dem Werkzeugkopf (14) gegenüberliegenden Ende des Schafts (12) angeordnetes Einsteckende (20) lösbar mit dem Schaft (12) gekoppelt und / oder koppelbar ist.
